# EUROPEAN PATENT APPLICATION

(11) **EP 4 597 188 A1**
(43) Date of publication of application: **06.08.2025**
(21) Application number: 25155249.3
(22) Date of filing: 31.01.2025
(51) Int. Cl.: G02B 6/44

(54) **OPTICAL FIBER DROP ENCLOSURE**

(30) Priority: 31.01.2024 US 202463627708 P
(71) Applicant: CommScope Technologies LLC, Hickory, NC 28602 (US)
(72) Inventor: BRYON, Roel Modest Willy, Hickory, 28602 (US); GEENS, Johan, Hickory, 28602 (US); MC KEOWN, James Patrick, Hickory, 28602 (US); ZAVREL, Jiri, Hickory, 28602 (US); ROELANDTS, Nico, Hickory, 28602 (US)
(74) Representative: Murgitroyd & Company

(57) **Abstract**

The present disclosure relates to an enclosure (20) having features for facilitating making upgrades in the field. In one example, the enclosure includes a pass-through cable coil storage location positioned directly behind a front cover (24) of the enclosure. In one example, the enclosure can be upgraded by replacing a first front cover (24) having a first depth with a second front cover (120) having a second depth larger than the first depth. The enclosure can include cable pass-through openings (46, 48 & 50), drop cable pass-through openings (56), and a demarcation cover (100) with an opening (120) for receiving pivotally mounted fiber optic connector adapters (60) and covering a splice tray (76) within the enclosure.

## Description

### CROSS-REFERENCE TO RELATED APPLICATION

This application claims the benefit of U.S. Patent Application Serial No. 63/627,708 filed on January 31, 2024, the disclosure of which is incorporated herein by reference in its entirety.

### TECHNICAL FIELD

The present disclosure relates to telecommunication enclosures.

### BACKGROUND

Telecommunication enclosures can be used in fiber optic networks to access fibers from main cables to provide optical connections with drop cables. The main cables can be routed through the telecommunication enclosures in in-line or butt-style pass-through configurations.

### SUMMARY

One aspect of the present disclosure relates to a telecommunication enclosure having a base, a front cover that mounts to a front of the base, and a front located buffer tube coil storage location for accommodating a buffer tube coil of a pass-through cable routed through the telecommunication enclosure. In one example, the front located buffer tube coil storage location is located directly behind the front cover. In one example, the front located buffer tube coil storage location is positioned in front of a row of adapters. In one example, the row of adapters is pivotally connected to the base. In one example, a demarcation cover retains the adapters in a pivoted position in which first ports of the adapters face at least partially forwardly and second ports of the adapters face at least partially rearwardly. In one example, connectorized drop cables extend in front of the demarcation plate and plug into the first ports, and connectorized pigtails spliced to fibers of a pass-through cable extend behind the demarcation plate and plug into the second ports. In one example, the buffer tube coil storage location is at a front level of the enclosure, the drop cables are at an intermediate level of the enclosure and the connectorized pigtails are at a rear level of the enclosure. In one example, a splice tray is provided at the rear level for holding splices between the connectorized pigtails and the fibers of the pass-through cable. In one example, the drop cables extend from the fiber optic adapters to drop cable openings defined by a first side of the base; and the spice tray is located directly behind the drop cables. In one example, the fiber optic adapters are arranged in a row along a centerline offset from a midline of the enclosure in a direction away from the first side of the base.

Another aspect of the present disclosure relates to an enclosure having interchangeable front covers having different depths.

Another aspect of the present disclosure relates to a method for upgrading an enclosure having a buffer tube coil located directly behind a first front cover of the enclosure. The method includes removing the first front cover having a first depth and accessing optical fibers of the buffer tube coil. The method also includes mounting splice trays at a front location previously occupied by the buffer tube coil and routing the optical fibers on the splice trays. The method further includes replacing the first front cover with a second front cover having a second depth larger than the first depth.

A variety of additional inventive aspects will be set forth in the description that follows. The inventive aspects can relate to individual features and to combinations of features. It is to be understood that both the foregoing general description and the following detailed description are exemplary and explanatory only and are not restrictive of the broad inventive concepts upon which the embodiments disclosed herein are based.

### BRIEF DESCRIPTION OF THE DRAWINGS

The accompanying drawings, which are incorporated in and constitute a part of the description, illustrate several aspects of the present disclosure. A brief description of the drawings is as follows:
FIG. 1 is a front perspective view of an enclosure in accordance with the principles of the present disclosure that includes a base and a front cover;
FIG. 2 is another front perspective view of the enclosure of FIG. 1;
FIG. 3 is a front view of the enclosure of FIG. 1;
FIG. 4 is a perspective view of a portion of a hinge of the enclosure of FIG. 1;
FIG. 5 is a front perspective view of the enclosure of FIG. 1 with the front cover removed;
FIG. 6 is another front perspective view of the enclosure of FIG. 1 with the front cover removed;
FIG. 7 is a front view of the enclosure of FIG. 1 with the front cover removed;
FIG. 8 is a front a front perspective view of the enclosure of FIG. 1 with the front cover removed and a demarcation cover installed in the base to divide the base into different levels;
FIG. 9 is a perspective view of the base of the enclosure of FIG. 1 with an in-line pass-through cable and drop cables incorporated therein and with a buffer tube storage coil of the pass-through cable in an offset position;
FIG. 10 is a perspective view of the arrangement of FIG. 9 with the buffer tube storage coil in a stored position;
FIG. 11 is an end view of another front cover that can be interchanged with the front cover of the enclosure of FIG. 1 and which as a larger depth than the front cover of FIG. 1; and
FIG. 12 depicts the base of the enclosure of FIG. 1 with a pass-through cable installed in a butt-style pass-through configuration.

### DETAILED DESCRIPTION

Aspects of the present disclosure relate to an enclosure configuration that is upgradable in the field to add splice trays for making field repairs with respect to a pass-through fiber optic cable routed through the enclosure. The enclosure configuration can include a first cover with a first depth that can be interchanged with a second cover having a second depth. The second depth can be larger than the first depth and can be sized to accommodate the addition of a plurality of splice trays for making optical splices for field repairs. The enclosure can initially be deployed with a base that attaches to a mounting structure (e.g., a wall, pole, facade, etc.) and the first cover attached to cover an open front side of the base. The base can be configured to accommodate a pass-through cable in an in-line configuration or in a butt-style configuration. The base can also be configured to accommodate a plurality for drop cables. Cable entry/exit locations for the drop cables and the pass-through cable can be sealed. A perimeter seal can be provided between the base and the first cover when the first cover is secured over the front of the base, and between the base and the second cover when the second cover is secured to the base in place of the first cover. Optical components can be arranged in different levels within the enclosure. In one example, the levels can include a first level, a second level and a third level with the second level being positioned between the first and second levels. In one example, the first level can be a back level (e.g., a level deepest within the base) and can include a splice tray for splicing connectorized fiber optic pigtails to optical fibers accessed from the pass-through cable. In one example, a demarcation cover can be positioned over (i.e., in front of) the first level so as to cover and block access to the splice tray, accessed optical fibers and the pigtails spliced to the accessed optical fibers. In one example, the second level can be a level in front of the demarcation cover and the drop cables can be located at the second level. In one example, excess length of unaccessed buffer tubes of the pass-through cable can be coiled and stored at the third level in front of the drop cables. The front location of the coiled buffer tubes facilitates accessing the buffer tubes without disturbing the components at the first level. To conduct field repairs, the coiled buffer tubes can be stripped to access the inner fibers which are routed onto splice trays added to the enclosure. The additional splice trays can be mounted to occupy space (e.g., the third level) previously occupied by the coiled buffer tubes. The additional trays can be arranged in a stacked configuration and the first cover can be replaced with the second cover to provide the enclosure with sufficient depth the accommodate the splice trays. Fiber optic adapters can be provided for connecting the drop cables to the fiber optic pigtails.

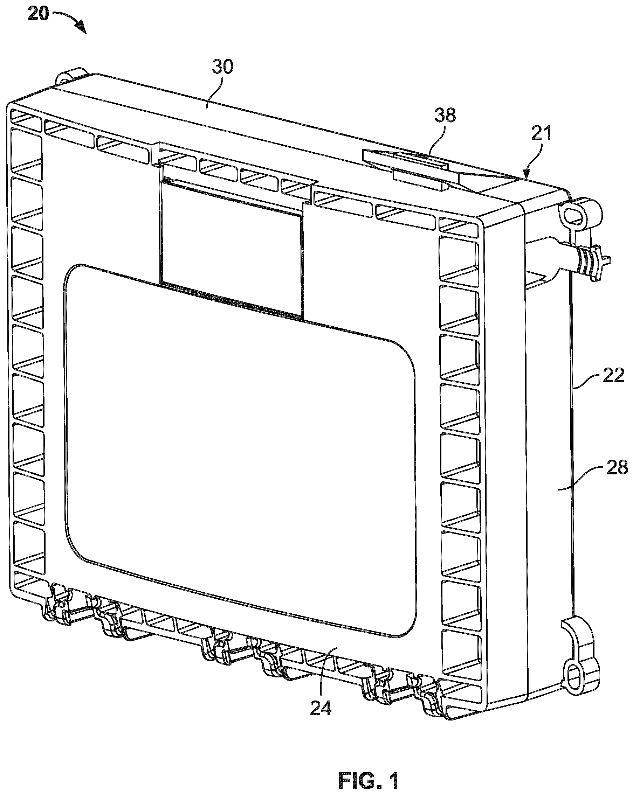

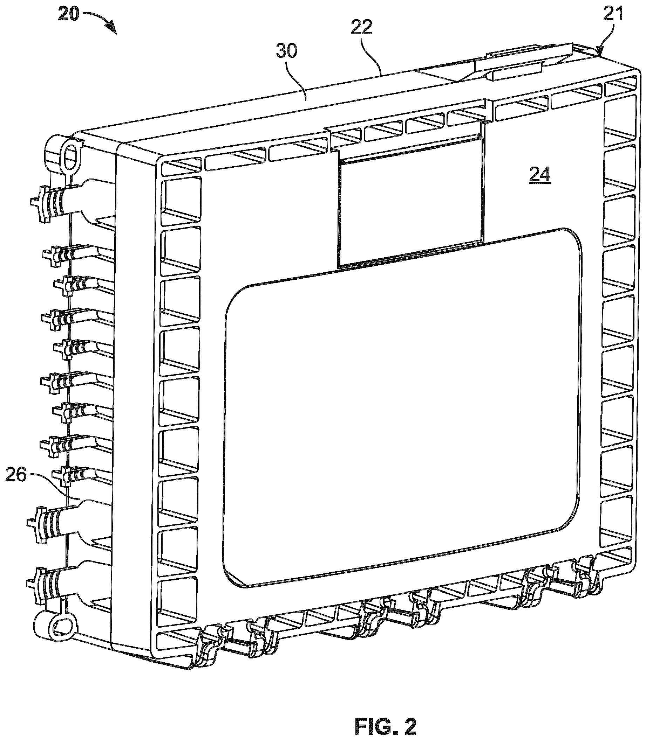

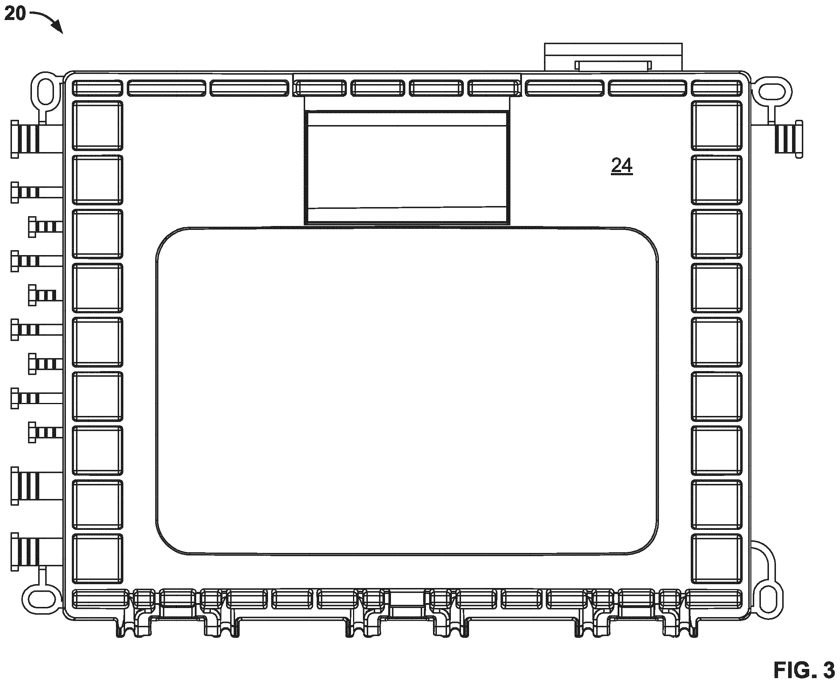

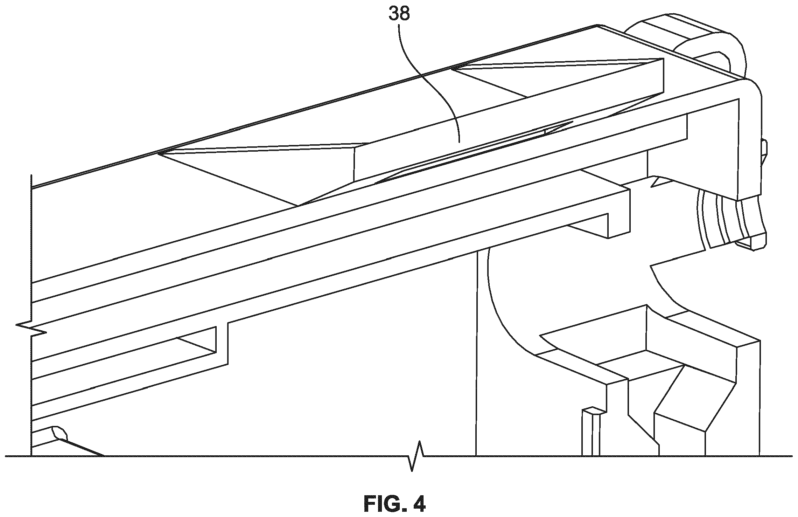

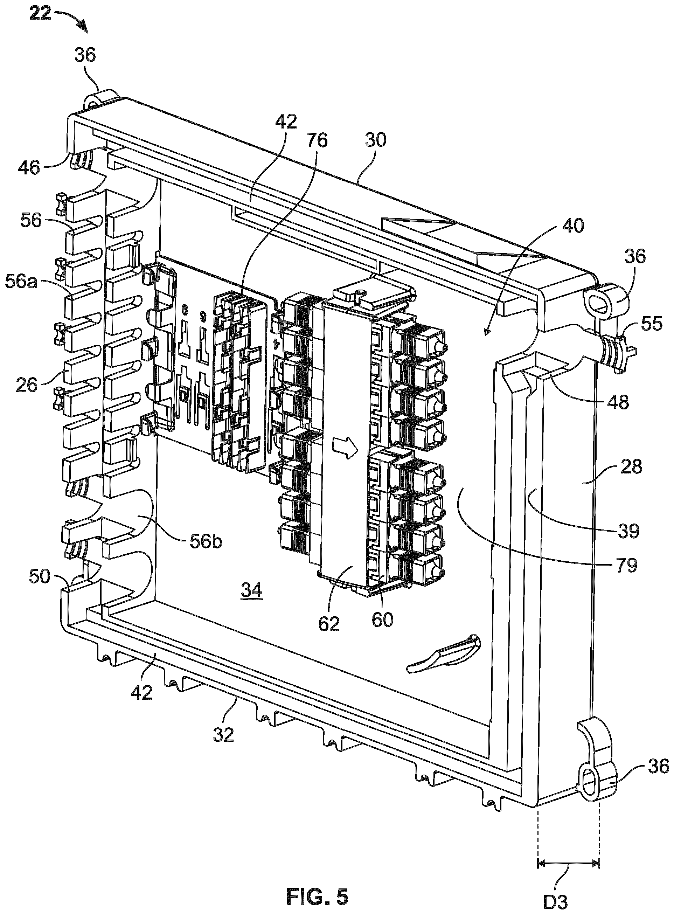

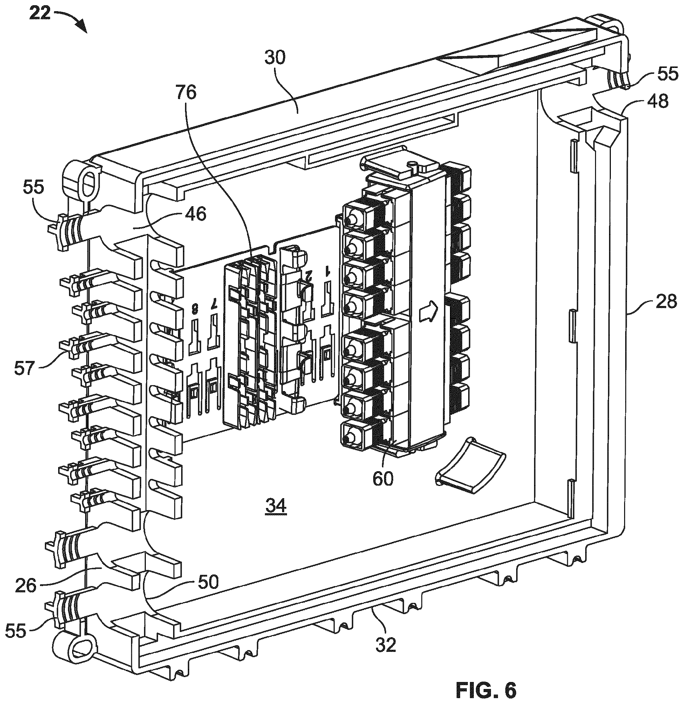

FIGS. 1-12 depict an enclosure 20 in accordance with the principles of the present disclosure. The enclosure 20 includes a housing 21 including a base 22 and a first cover 24. The base 22 has a rectangular perimeter shape and includes first and second opposite sides 26, 28 and third and fourth opposite sides 30, 32 that extend between the first and second opposite sides 26, 28. The base defines a first dimension D1 that extends between the first and second opposite sides 26, 28 and a second dimension D2 that extends between the third and fourth opposite sides 30, 32. The sides 26, 28, 30, 32 can be referred to as side walls. The first, second, third and fourth sides 26, 28, 30 and 32 have depth dimensions D3 that project forwardly from a rear wall 34 of the base 22 and define a depth of the base. The base 22 is configured to be mounted in the field to a structure such as a wall, pole, facade or the like). For example, the base 22 can include tabs 36 for receiving fasteners for attaching the base 22 to the structure with the depth dimensions D3 of the first, second, third and fourth sides 26, 28, 30 and 32 projecting forwardly from the structure.

The first cover 24 can attach to the base 22 via a hinge 38 located at the third side 30. The hinge can define a pivot axis at the third side 30 that extend along the first dimension D 1 about which the first cover 24 can pivot relative to the base 22 between a first position and a second position. In one example, the first position is a closed position in which the first cover 24 covers an open front side 39 of the base 22 defined by forward portions of the first, second, third and fourth sides 26, 28, 30 and 32 of the base 22. In one example, the second position is an open position in which the first cover 24 is positioned such that the front side 39 of the base 22 is unobstructed to allow access to an interior 40 of the base 22. In another example, the second position is a hinge detachment position at which the first cover 24 can be detached from the base 22 to prevent obstruction of the front side 39 of the base 22 and allow access to the interior 40 of the base. In one example, the range of pivotal movement of the first cover 24 about the pivot axis relative to the base 22 between the closed position and the hinge detachment position is less than 45 degrees. Latches can be provided at the fourth side 32 for latching the first cover 24 in the closed position relative to the base 22.

Environmental sealing can be provided between the base 22 and the first cover 24 at the front side 39 of the base. For example, perimeter sealing can be provided between the base 22 and the front cover 24. In certain examples, the perimeter sealing can be provided by a gasket-style perimeter seal or a gel-style perimeter seal. In the depicted example, the forward portions of the first, second, third and fourth sides 26, 28, 30 and 32 of the base 22 can define segments of a perimeter channel 42 for receiving and at least partial containing perimeter sealing material used to provide perimeter sealing between the base 22 and the first cover 24.

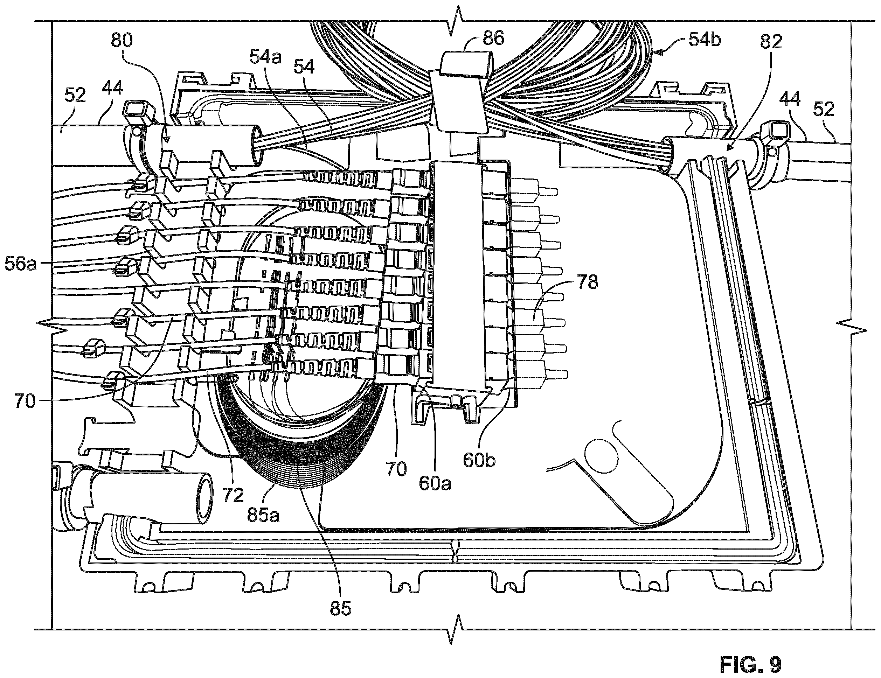

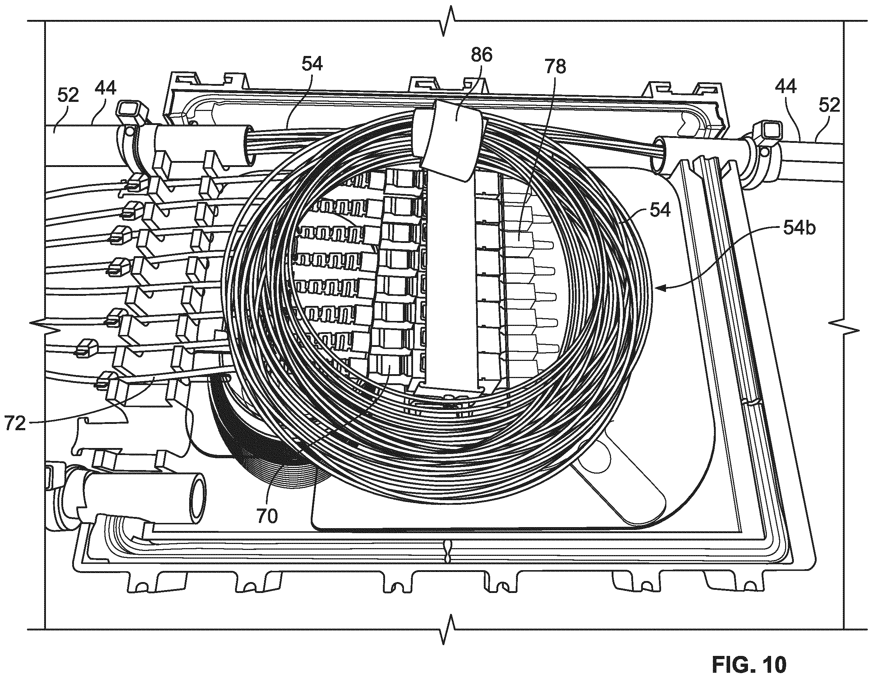

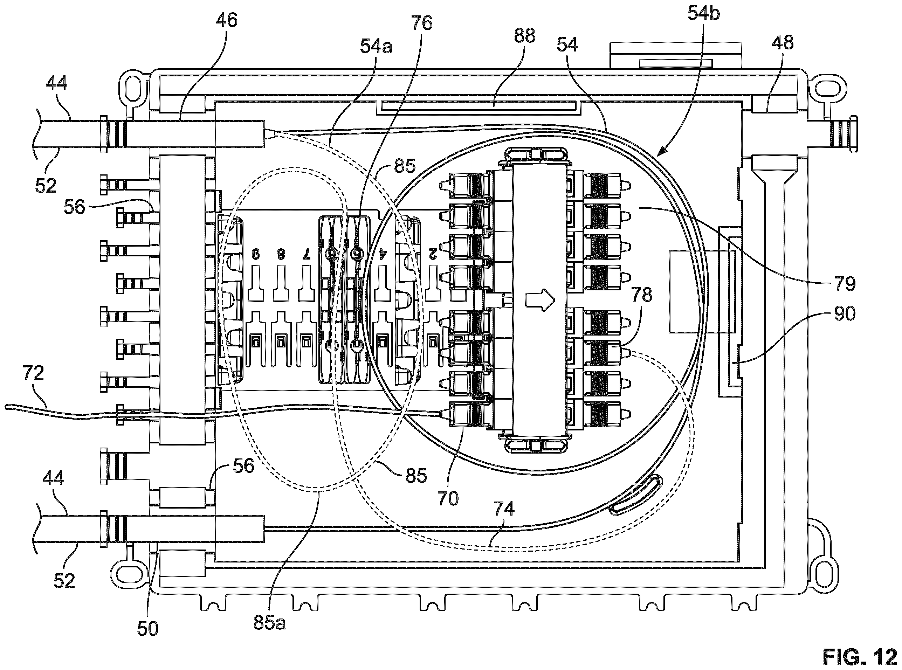

The enclosure 20 can be configured to accommodate a multi-fiber distribution cable 44 in an in-line pass-through configuration (see FIGS. 9 and 10) or in a butt-style pass-through configuration (see FIG. 12). For example, the base 22 can define a first pass-through opening 46 through the first side 26 of the base 22 and a second pass-through opening 48 through the second side 28 of the base 22. The first and second pass-through openings 46, 48 can be arranged in-line with one another along a cable pass-through 51 axis that is parallel to the first dimension D1. In one example, the cable pass-through axis 51 is parallel to the hinge pivot axis of the first cover 24. In one example, the first and second pass-through openings 48 are positioned adjacent the third side 30 of the base 22. The arrangement of the first and second pass-through openings 46, 48 allows the multi-fiber pass-through cable 44 to be routed through the enclosure 20 in an in-line pass-through configuration through opposite sides of the enclosure. The base 22 can further define a third pass-through opening 50 which is defined through the first side 26 of the base 22 at a location adjacent the fourth side 32 of the base 22. The arrangement of the first and third pass-through openings 46, 50 allows the multi-fiber pass-through cable 44 to be routed through the enclosure 20 in a butt-style pass-through configuration through the same side of the enclosure. The pass-through openings can be sealed (e.g., by a sealant such as gel). The base 22 includes cable anchoring structures 55 (e.g., tie-down projections) at the exterior of the base adjacent to each of the pass-through openings 46, 48 and 50 for anchoring (e.g., clamping, strapping, or otherwise securing) the multi-fiber distribution cable 44 to the base 22.

In certain examples, the multi-fiber distribution cable 44 can include at least 36 optical fibers, or at least 48 optical fibers, or at least 60 optical fibers, or at least 72 optical fibers, or at least 84 optical fibers, or at least 96 optical fibers. The multi-fiber distribution cable 44 can include an outer jacket 52 that encloses a plurality of buffer tubes 54 each containing a plurality of optical fibers. In one example, the multi-fiber distribution cable includes at least 3, 4, 5, 6, 7 or 8 buffer tubes each containing at least 2, 4, 6, 8, 10 or 12 optical fibers.

The enclosure 20 can define a plurality of drop cable openings. The drop cable openings can be defined through any of the sides 26, 28, 30 and 32. As depicted, drop cable openings 56 are defined through the first side 26 at a region of the side 26 between the first and third pass-through openings 46, 50. The drop cable openings 56 include first drop cable openings 56a sized for accommodating relatively small cables such as single fiber drop cables. The drop cable openings 56 can also include at least one second drop cable opening 56b for accommodating a larger drop cable such as a multi-fiber drop cable. The drop openings can be sealed (e.g., by a sealant such as gel). The base 22 includes cable anchoring structures 57 (e.g., tie-down projections) at the exterior of the base adjacent to each of drop openings 56a for anchoring (e.g., clamping, strapping, or otherwise securing) the drop cables routed through the drop openings 56 to the base 22.

The enclosure 20 includes a plurality of fiber optic adapters 60 each configured for optically connected together two fiber optic connectors. As depicted, the adapters are SC fiber optic adapters for optically connecting together SC fiber optic connectors. Other types of fiber optic adapters (e.g., LC fiber optic adapters; MPO fiber optic adapters) can also be used. The fiber optic adapters 60 are mounted in the base 22 with first connector ports 60a facing toward the first side 26 of the base 22 and second connector ports 60b facing toward the second side 28 of the base 22. The connector ports 60a, 60b are configured for receiving fiber optic connectors. The fiber optic adapters 60 can each include a ferrule alignment sleeve for receiving and co-axially aligning ferrules of the fiber optic connectors received within the connector ports 60a, 60b. As depicted, the fiber optic adapters 60 are arranged in a row aligned along a central axis 65 that extends along the second dimension D2 of the base 22. The fiber optic adapters 60 are depicted mounted within an adapter mount 62 that is pivotally connected to the base 22. In the depicted example, the fiber optic adapters 60 are arranged in two four-packs mounted in the adapter mount 62 with each of the four-packs including four of the fiber optic adapters 60. The adapter mount 62 is pivotally moveable relative to the base 22 about the central axis 65.

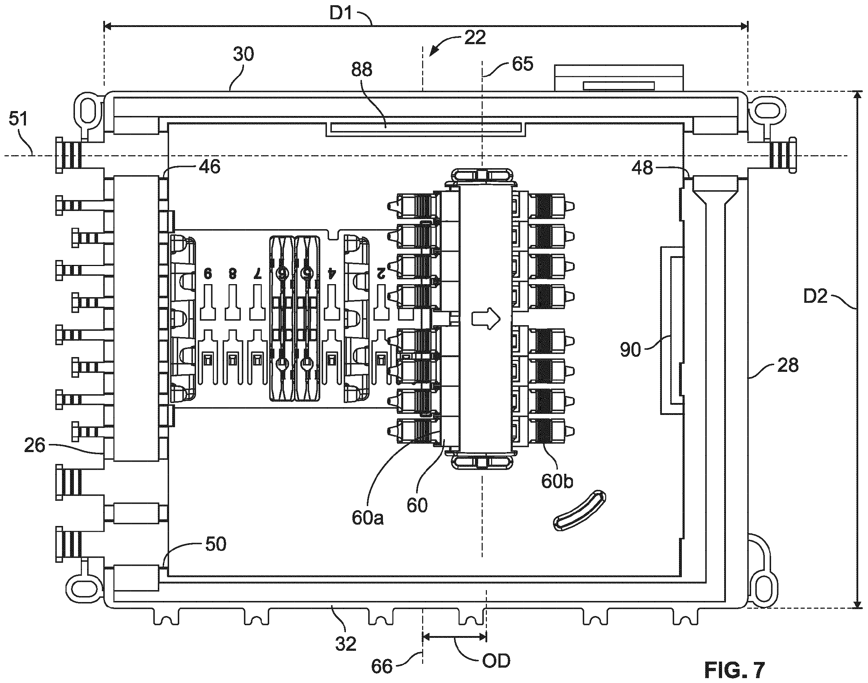

Referring to FIG. 7, the first dimension D1 of the base 22 is shown bisected by a reference line 66. The central axis 65 of the row of fiber optic adapters 60 is parallel to the reference line 66 and offset from the reference line 66 in a direction toward the second side 28 of the base 22. In one example, an offset distance OD of the central axis 65 with respect to the reference line 66 is at least 5 percent or at least 10 percent of the total first dimension D 1. By offsetting the fiber optic adapters 60 away from the first side 26 of the base 22, the fiber optic adapters 60 are offset away from the drop openings 56 thereby providing more space in the base 22 for accommodating connectorized ends 70 of drop cables 72 routed through the drop openings 56 and plugged into the first connector ports 60a of the fiber optic adapters 60. The extra space provided by offsetting the fiber optic adapters 60 is particularly beneficial for drop cables terminated with field splice fiber optic connectors which are typically longer than directly terminated fiber optic connectors. A drop cable routing region 71 is defined between the fiber optic adapters 60 and the first side 26 of the base 22. As shown at FIGS. 9 and 10, the connectorized ends 70 of the drop cables 72 are plugged into the first connector ports 60a of the adapters 60. The drop cables 72 extend through the first drop openings 56a and across the drop cable routing region 71 to the connector ports 60a of the fiber optic adapters 60.

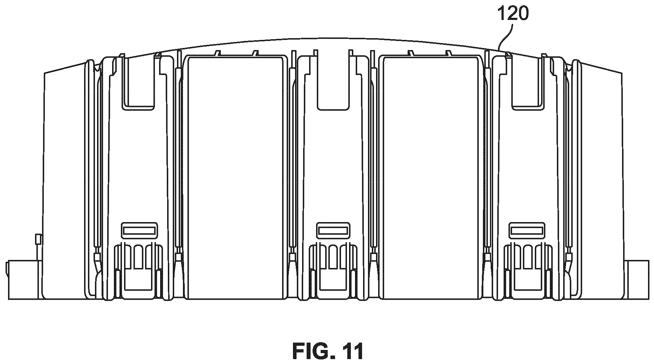

FIGS. 9 and 10 depict the enclosure 20 with the multi-fiber distribution cable 44 routed through the enclosure 20 in an in-line configuration in which the multi-fiber cable 44 passes through the first and second pass-through openings 46, 48. Within the enclosure 20, the jacket 52 has been removed (e.g., stripped) from the buffer tubes 54 such that the buffer tubes 54 are exposed. A first one of the buffer tubes 54a (see FIG. 11) is cut and stripped to expose the optical fibers 85 corresponding to the buffer tube 54a within the enclosure 20. The optical fibers 85 are optically spliced to fiber optic pigtails 74. The optical splices between the optical fibers 85 of the buffer tube 54a and the fiber optic pigtails 74 can be protected within splice protection packages (e.g., heat shrink tubes containing adhesive and including a strength rod) that are stored at a splice tray 76 secured to the rear wall 34 of the base 22 at a location behind the drop cable mounting region 71. The fiber optic pigtails 74 are routed from the splice tray 76 along the rear wall 34 of the base 22 to the adapters 60 with connectorized ends 78 of the fiber optic pigtails 74 plugging into the second connector ports 60b of the fiber optic adapters 60 such that the drop cables 72 are optically connected to the fiber optic pigtails 74 and their corresponding optical fibers of the buffer tube 54a. Excess length 85a of the optical fibers 85 can be looped/coiled and stored at the splice tray 76 at the rear wall 34 of the base 22. To reach the second connector ports 60b, the fiber optic pigtails 74 are routed along the rear wall 34 through a pigtail routing region 79 defined between the second connector ports 60b and the second side 28 of the base 22.

The remainder of the buffer tubes 54 are not cut and are routed from a first section 80 of the multi-fiber distribution cable 44 at the first pass-through opening 46 to a second section 82 of the multi-fiber distribution cable 44 at the second pass-through opening 48. Excess length of the uncut buffer tubes 54 can be routed in a coil 54b and stored within the enclosure 20 at a location in front of the adapters 60, the drop cables 72 and the fiber optic pigtails 74. The coil 54b can be secured to the base 22 by a fastener 86 (e.g., a strap such as strap with a hook and loop fastening arrangement) that attaches to the base 22 at a first coil fastening location 88 (e.g., a slot) provided at the third side 30 of the base 22. The coil 54b is moveable (e.g., pivotal relative to the coil fastening location 88) between a first position (see FIG. 10) in which the coil 54b is in front of the row of adapters 60 and a second position (see FIG. 9) in which the coil 54b is positioned away from the row of adapters 60 (e.g., extending outside the perimeter of the base 22). FIG. 12 shows the multi-fiber distribution cable 44 routed in a butt-stye pass-through configuration in which the first and second sections 80, 82 are secured at the first and through pass-through openings 46, 48 and the coil 54b is secured to the base 22 by at fastener 86 that attaches to the base at a second coil fastening location 90 (e.g., a slot) located at the second side 28 of the base 22. The first and second coil fastening locations 88, 90 are offset 90 degrees with respect to each other and each location 88, 90 is configured to allow for pivotal movement of the coil 54b when the coil 54b is attached thereto.

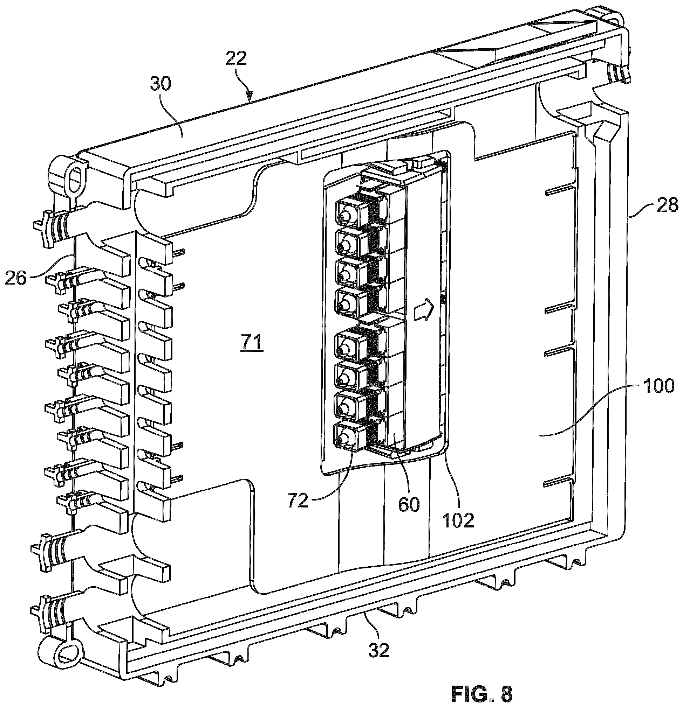

Referring to FIG. 8 a demarcation cover 100 can be installed in the base 22 to cover and hinder access to a first level within the base 22 which includes the splice tray 76, the optical fibers 85, the fiber optic pigtails 74, the connectorized ends 78 and the pigtail routing region 79. A second level of the enclosure 20 includes the drop cables 72 and is positioned in front of the demarcation cover 100. A third level of the enclosure 20 includes the coil 54b and is positioned in front of the second level. The demarcation cover 100 includes an opening 102 for receiving the adapters 60 and is configured to retain the adapters 60 at a pivoted orientation in which the first connector ports 60a face at least partially forwardly toward the second level and the second connector ports 60b face at least partially rearwardly toward the first level. Thus, the adapters 60 provide a transition between the first and second levels.

Initially, the enclosure 20 can be deployed with the base 22 attached to a structure in the field and the first cover 24 mounted the front of the base 22. The multi-fiber distribution cable 44 can be routed through the enclosure in either the in-line and butt-style pass-through configuration as described above and the coil 54b can be located at the third level directly behind the first cover 24. The adapters 60 and the first and second levels can be configured as described above. If it is desired to upgrade the enclosure to provide additional splicing capabilities (e.g., for field repairs), the first cover 24 can be removed to provide ready access to the front located coil 54b. The coil 54b of buffer tubes can be prepared (e.g., by stripping the buffer tubes to expose the fibers and a stack of splice trays can be installed at the third level such that the splice trays occupy space previously occupied by the coil 54b. The splice trays can be pivotally connected to a tray mount (e.g., a tower) configured for interconnecting to the base 22 via connection with one of the first or second coil fastening locations 88, 90. If the multi-fiber distribution cable is in an in-line configuration, the tray mount couples to the first coil fastening location 88 with the trays oriented in a first orientation. If the multi-fiber distribution cable is in a butt-style configuration, the tray mount couples to the second coil fastening location 90 with the trays oriented in a second orientation rotated 90 degrees relative to the first orientation. The exposed optical fibers can be routed onto the added splice trays for fiber management and splicing. The first front cover 24 can be replaced with a second front cover 120 having a larger depth than the first front cover to enable accommodation of the added splice trays (which have a greater depth than the coil 54b and thus require the greater depth provided by the second cover to fit within the enclosure. The second front cover 120 can have a hinged configuration similar to the first front cover 24 and can be mounted in sealed relation with respect to the base at the front of the base 22.

The various examples described above are provided by way of illustration only and should not be construed to limit the scope of the present disclosure. Those skilled in the art will readily recognize various modifications and changes that may be made without following the example examples and applications illustrated and described herein, and without departing from the true spirit and scope of the present disclosure.

### ASPECTS OF THE PRESENT DISCLOSURE

Aspect 1. An enclosure comprising:
a housing including a base and a first front cover that mounts to a front of the base, the base being rectangular in shape and having first and second opposite sides and third and fourth opposite sides, the base defining a first cable pass-through opening, a second cable pass-through opening and a third cable pass-through opening, the first and third cable pass-through openings being defined through the first side and the second cable pass-through opening being defined through the second side, the first and second cable pass-through openings being arranged to accommodate a pass-through cable in an in-line configuration, the first and third cable pass-through openings being arranged to accommodate the pass-through cable in a butt-style configuration; the based defining drop cable pass-through openings through the first side at a region between the first and third cable pass-through openings;
a row of fiber optic adapters pivotally connected to the base, the fiber optic adapters having first connector ports that face at least partially toward the first side of the base and second connector ports that face at least partially toward the second side of the base;
a demarcation plate that mounts in the base and defines an opening for receiving the fiber optic adapters, the fiber optic adapters being pivoted to a position in which the first connector ports face at least partially forwardly and the second connector ports face at least partially rearwardly, wherein the fiber optic adapters provide a transition between a rear and a front side of the demarcation cover; and
a buffer tube coil storage location positioned in front of the demarcation cover and the fiber optic adapters.

Aspect 2. The enclosure of aspect 1, wherein a splice tray is mounted within the base behind the demarcation cover.

Aspect 3. The enclosure of aspects 1 or 2, wherein fiber optic pigtails are positioned behind the demarcation cover, the fiber optic pigtails having connectorized ends that plug into the second connector ports, the fiber optic pigtails being spliced to optical fibers of a pass-through cable routed through the enclosure, wherein splices between the fiber optic pigtails and the optical fibers are held at the splice tray.

Aspect 4. The enclosure of any of aspects 1-3, wherein the base is bisected by a reference mid-line that extends through the third and fourth sides and is parallel to the first and second sides, and wherein the spice tray is positioned in the base between the mid-line and the first side.

Aspect 5. The enclosure of any of aspects 1-4, wherein the row of adapters has a centerline offset from the mid-line in a direction toward the second side of the base.

Aspect 6. The enclosure of any of aspects 1-5, wherein the buffer tube coil storage location includes a first coil connection location at the third side of the base for securing a buffer tube coil of the pass-through cable to the base when the pass-through cable is in the in-line configuration, and wherein the buffer tube coil storage location includes a second coil connection location at the second side of the base for securing a buffer tube coil of the pass-through cable to the base when the pass-through cable is in the butt-style configuration.

Aspect 7. The enclosure of any of aspects 1-6, wherein the first front cover has a first depth and is exchangeable with a second front cover having a second depth that is larger than the first depth.

Aspect 8. The enclosure of any of aspects 1-7, further comprising a splice tray arrangement that can be mounted at the buffer tube coil storage location in place of the buffer tube coil.

Aspect 9. The enclosure of any of aspects 1-8, wherein the splice tray arrangement mounts to the first coil connection location when the pass-through cable is in the in-line configuration and mounts to the second coil connection location when the pass-through cable is in the butt-style configuration.

Aspect 10. An enclosure comprising:
a housing including a base and a first front cover that mounts to a front of the base;
a buffer tube coil storage location provided at a forward level of the housing; and
fiber optic adapters and a splice tray provided rearward of the forward level of the housing.

Aspect 11. The enclosure of aspect 10, wherein the first front cover has a first depth and is exchangeable with a second front cover having a second depth larger than the first depth.

Aspect 12. The enclosure of aspects 10 or11, further comprising a splice tray arrangement that can be mounted at the buffer tube coil storage location in place of the buffer tube coil.

Aspect 13. The enclosure of any of aspects 10-12, wherein fibers of buffer tubes of the buffer tube coil are routed onto the splice tray arrangement.

Aspect 14. The enclosure of any of aspects 10-13, wherein the enclosure can accommodate a pass-through cable in an in-line configuration and in a butt-style configuration, and wherein the buffer tube coil storage location includes a first coil attachment location used when the pass-through cable is in the in-line configuration and a second coil attachment location used when the pass-through cable is in the butt-style configuration.

Aspect 15. The enclosure of any of aspects 10-14, wherein the first and second coil attachment locations are offset 90 degrees with respect to each other.

Aspect 16. An enclosure comprising:
a housing including a base and a first front cover that mounts to a front of the base;
a buffer tube coil storage location provided at a forward level of the housing;
a splice tray arrangement that can replace a buffer tube coil at the buffer tube coil storage location to provide an upgrade; and
wherein the first front cover has a first depth and is exchangeable with a second front cover having a second depth larger than the first depth and suitable for accommodating the splice tray arrangement.

Aspect 17. A method for upgrading an enclosure having a buffer tube coil located directly behind a first front cover of the enclosure, the method comprising:
removing the first front cover having a first depth and accessing optical fibers of the buffer tube coil;
mounting splice trays at a front location previously occupied by the buffer tube coil and routing the optical fibers on the splice trays; and
replacing the first front cover with a second front cover having a second depth larger than the first depth.

## Claims

1. An enclosure comprising:
a housing including a base and a first front cover that mounts to a front of the base, the base being rectangular in shape and having first and second opposite sides and third and fourth opposite sides, the base defining a first cable pass-through opening, a second cable pass-through opening and a third cable pass-through opening, the first and third cable pass-through openings being defined through the first side and the second cable pass-through opening being defined through the second side, the first and second cable pass-through openings being arranged to accommodate a pass-through cable in an in-line configuration, the first and third cable pass-through openings being arranged to accommodate the pass-through cable in a butt-style configuration; the based defining drop cable pass-through openings through the first side at a region between the first and third cable pass-through openings;
a row of fiber optic adapters pivotally connected to the base, the fiber optic adapters having first connector ports that face at least partially toward the first side of the base and second connector ports that face at least partially toward the second side of the base;
a demarcation plate that mounts in the base and defines an opening for receiving the fiber optic adapters, the fiber optic adapters being pivoted to a position in which the first connector ports face at least partially forwardly and the second connector ports face at least partially rearwardly, wherein the fiber optic adapters provide a transition between a rear and a front side of the demarcation cover; and
a buffer tube coil storage location positioned in front of the demarcation cover and the fiber optic adapters.

2. The enclosure of claim 1, wherein a splice tray is mounted within the base behind the demarcation cover.

3. The enclosure of claim 1 or 2, wherein fiber optic pigtails are positioned behind the demarcation cover, the fiber optic pigtails having connectorized ends that plug into the second connector ports, the fiber optic pigtails being spliced to optical fibers of a pass-through cable routed through the enclosure, wherein splices between the fiber optic pigtails and the optical fibers are held at the splice tray.

4. The enclosure of any of claims 1-3, wherein the base is bisected by a reference mid-line that extends through the third and fourth sides and is parallel to the first and second sides, and wherein the spice tray is positioned in the base between the mid-line and the first side.

5. The enclosure of claim 4, wherein the row of adapters has a centerline offset from the mid-line in a direction toward the second side of the base.

6. The enclosure of claim 1, wherein the buffer tube coil storage location includes a first coil connection location at the third side of the base for securing a buffer tube coil of the pass-through cable to the base when the pass-through cable is in the in-line configuration, and wherein the buffer tube coil storage location includes a second coil connection location at the second side of the base for securing a buffer tube coil of the pass-through cable to the base when the pass-through cable is in the butt-style configuration.

7. The enclosure of claim 1, wherein the first front cover has a first depth and is exchangeable with a second front cover having a second depth that is larger than the first depth.

8. The enclosure of claim 6, further comprising a splice tray arrangement that can be mounted at the buffer tube coil storage location in place of the buffer tube coil.

9. The enclosure of claim 8, wherein the splice tray arrangement mounts to the first coil connection location when the pass-through cable is in the in-line configuration and mounts to the second coil connection location when the pass-through cable is in the butt-style configuration.
